# EUROPEAN PATENT APPLICATION

(11) **EP 4 656 395 A1**
(43) Date of publication of application: **03.12.2025**
(21) Application number: 25179455.8
(22) Date of filing: 28.05.2025
(51) Int. Cl.: B41J 3/46, G03G 15/00, H04N 1/00

(54) **DISPLAY UNIT SUPPORT MECHANISM AND IMAGE FORMING APPARATUS**

(30) Priority: 30.05.2024 JP 2024087957
(71) Applicant: KYOCERA Document Solutions Inc., Osaka-shi, Osaka 540-8585 (JP)
(72) Inventor: Yamada, Masayuki, Osaka-shi, 540-8585 (JP); Okauchi, Yoshifumi, Osaka-shi, 540-8585 (JP); Yamada, Hiroyuki, Osaka-shi, 540-8585 (JP); Sannomiya, Yusuke, Osaka-shi, 540-8585 (JP)
(74) Representative: Plougmann Vingtoft a/s

(57) **Abstract**

A swing member (42) is supported by a base member (41) while being rotatable about a first axis line provided along a first direction. A rotation member (43) is supported by the swing member (42) while being rotatable about a second axis line provided along a second direction. A unit support member (44) is coupled to the rotation member (43), and a display unit (3) including a rectangular screen is fixed thereto. The unit support member (44) is, together with the rotation member (43) and the swing member (42), rotatable about the first axis line between a forward attitude in which the screen faces toward a front of a target device (1) and an upward attitude in which the screen faces upwardly. The unit support member (44) is, together with the rotation member (43), rotatable about the second axis line between a horizontal attitude in which the screen becomes horizontally long and a vertical attitude in which the screen becomes vertically long.

## Description

### INCORPORATION BY REFERENCE

This application is based upon and claims the benefit of priority from the corresponding Japanese Patent Application No. 2024-087957 filed on May 30, 2024, the entire contents of which are incorporated herein by reference.

### BACKGROUND

The present disclosure relates to a display unit support mechanism which rotatably supports a display unit, and an image forming apparatus.

An image forming apparatus such as a printer, a copying machine, or a multifunction peripheral includes a display unit including a horizontally-long screen. The image forming apparatus causes the display unit to display various menu screens or a display target image such as a print target image.

### SUMMARY

A display unit support mechanism according to an aspect of the present disclosure includes a base member, a swing member, a rotation member, and a unit support member. The base member is fixed to a target device. The swing member is supported by the base member while being rotatable about a first axis line provided along a first direction that is a left-right direction of the target device. The rotation member is supported by the swing member while being rotatable about a second axis line provided along a second direction that intersects with the first direction. The unit support member is coupled to the rotation member and is rotatable with the rotation member, and a display unit including a rectangular screen is fixed thereto. The unit support member is, together with the rotation member and the swing member, rotatable about the first axis line between a forward attitude in which the screen faces toward a front of the target device and an upward attitude in which the screen faces upwardly. The unit support member further is, together with the rotation member, rotatable about the second axis line between a horizontal attitude in which the screen becomes horizontally long and a vertical attitude in which the screen becomes vertically long.

An image forming apparatus according to another aspect of the present disclosure includes a main body, a display unit, and the display unit support mechanism. The main body incorporates therein a printing device which forms an image on a sheet. The display unit includes a rectangular screen. The display unit support mechanism is fixed to the main body and supports the display unit.

This Summary is provided to introduce a selection of concepts in a simplified form that are further described below in the Detailed Description with reference where appropriate to the accompanying drawings. This Summary is not intended to identify key features or essential features of the claimed subject matter, nor is it intended to be used to limit the scope of the claimed subject matter. Furthermore, the claimed subject matter is not limited to implementations that solve any or all disadvantages noted in any part of this disclosure.

### BRIEF DESCRIPTION OF THE DRAWINGS

Fig. 1 is a front view of an image forming apparatus including a display unit support mechanism according to an embodiment;
Fig. 2 is a first side view of the image forming apparatus including the display unit support mechanism according to the embodiment (a state where a display unit is in a forward attitude);
Fig. 3 is a second side view of the image forming apparatus including the display unit support mechanism according to the embodiment (a state where the display unit is in an upward attitude);
Fig. 4 is a diagram showing a schematic internal configuration of a main body in the image forming apparatus including the display unit support mechanism according to the embodiment;
Fig. 5 is a first perspective view of the display unit support mechanism according to the embodiment (a state where the support mechanism supports the display unit in a horizontal attitude);
Fig. 6 is a second perspective view of the display unit support mechanism according to the embodiment (a state where the support mechanism supports the display unit in a vertical attitude);
Fig. 7 is a third perspective view of the display unit support mechanism according to the embodiment (a state where a unit support member and a leaf spring have been removed);
Fig. 8 is a front view of the display unit support mechanism according to the embodiment (a state where the unit support member has been removed);
Fig. 9 is a perspective view of a base member and a swing member in the display unit support mechanism according to the embodiment;
Fig. 10 is a perspective view of a rotation member seen from a front side in the display unit support mechanism according to the embodiment;
Fig. 11 is a perspective view of the rotation member seen from a rear side in the display unit support mechanism according to the embodiment;
Fig. 12 is a perspective view of an intervention member seen from the front side in the display unit support mechanism according to the embodiment;
Fig. 13 is a perspective view of the intervention member seen from the rear side in the display unit support mechanism according to the embodiment;
Fig. 14 is a perspective view of a reinforcement member in the display unit support mechanism according to the embodiment;
Fig. 15 is an exploded perspective view showing a configuration of a tilt support portion in the display unit support mechanism according to the embodiment;
Fig. 16 is a cross-sectional view of a pivot support portion in the display unit support mechanism according to the embodiment (a cross-sectional view taken along the line K-K in Fig. 5);
Fig. 17 is a partial front view including the rotation member in the display unit support mechanism according to the embodiment;
Fig. 18 is a partial perspective view including a rotation member in a display unit support mechanism according to a modified example;
Fig. 19 is a three-view diagram of a slide member in the display unit support mechanism according to the modified example; and
Fig. 20 is a side view of a torsion coil spring in the display unit support mechanism according to the modified example.

### DETAILED DESCRIPTION

Hereinafter, an embodiment of the present disclosure will be described with reference to the drawings. It is noted that the following embodiment is an example of embodying the present disclosure and does not limit the technical scope of the present disclosure.

### [Configuration of image forming apparatus 10]

A display unit support mechanism 4 according to the embodiment constitutes a part of an image forming apparatus 10. The image forming apparatus 10 is capable of executing print processing for forming an image on a sheet 9.

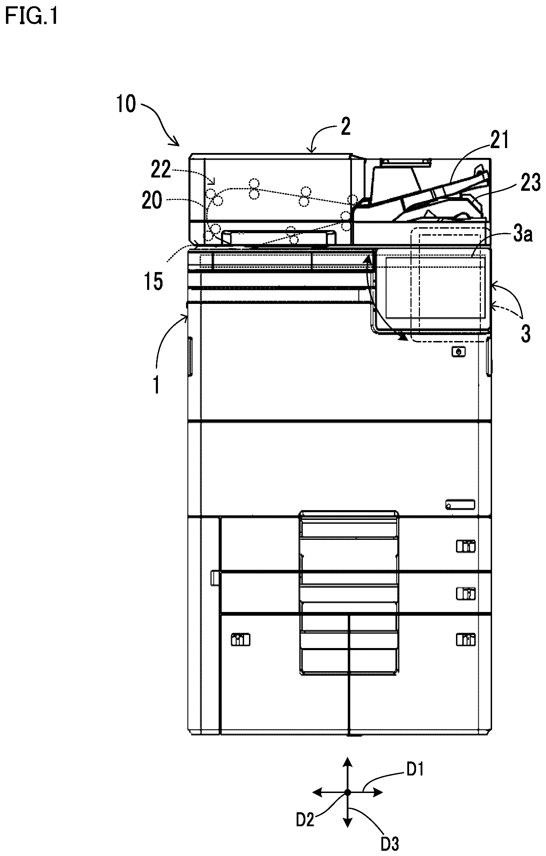

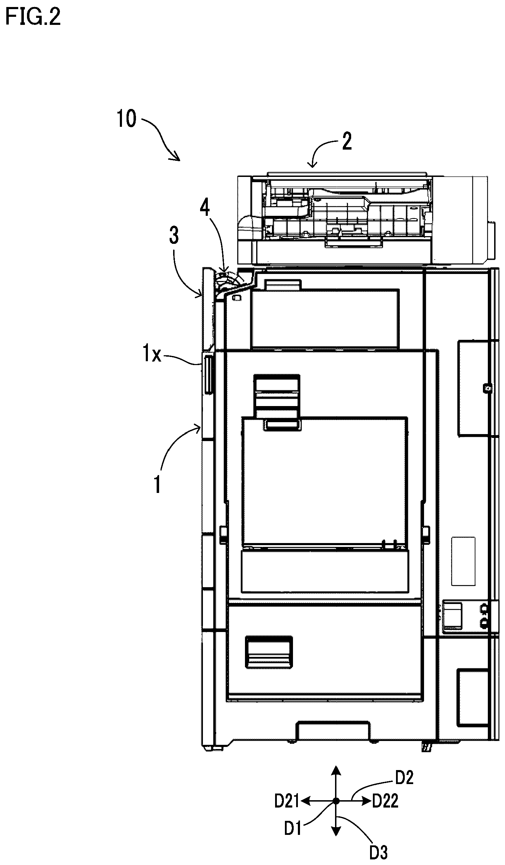

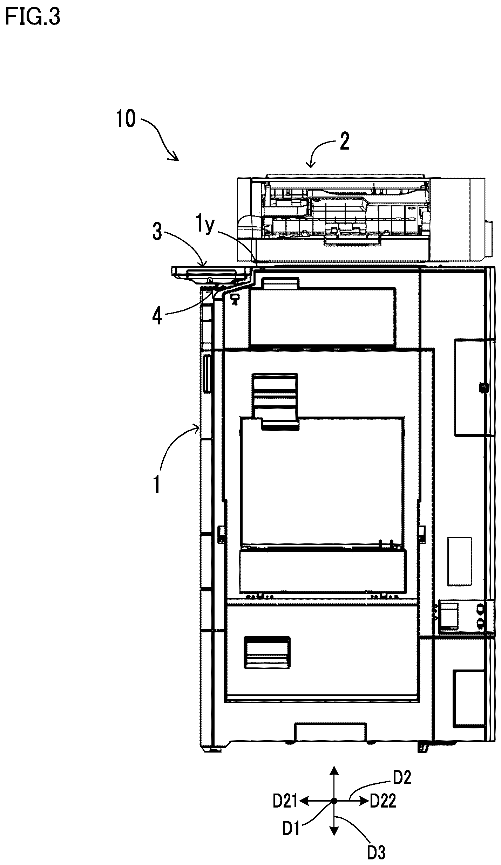

The image forming apparatus 10 includes a display unit 3 capable of displaying various types of information (see Fig. 1 to Fig. 3). The image forming apparatus 10 further includes a display unit support mechanism 4 which supports the display unit 3 (see Fig. 2 and Fig. 3).

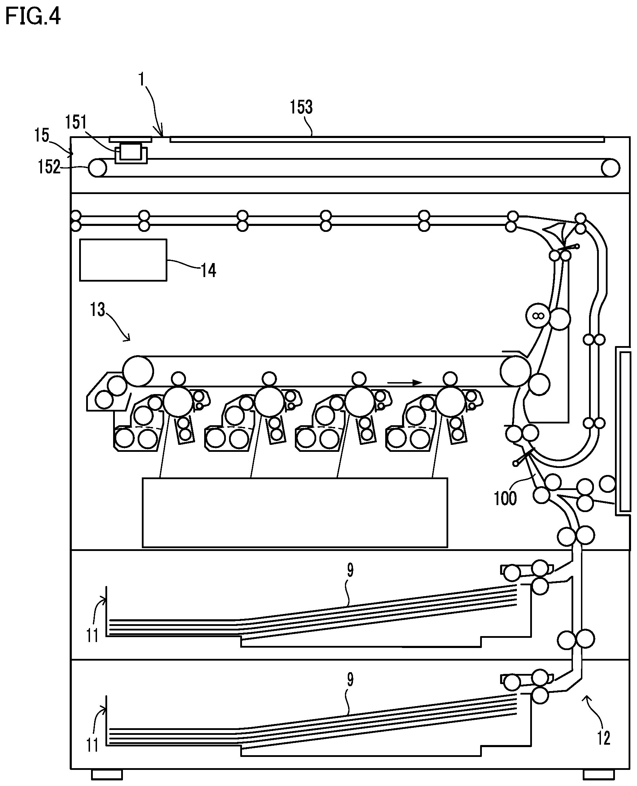

The image forming apparatus 10 includes a main body 1, a document sheet conveying device 2, and the display unit 3. The main body 1 includes a housing which incorporates therein main portions of the image forming apparatus 10, and members attached to the housing. The main body 1 incorporates therein a sheet storing portion 11, a sheet conveying device 12, a printing device 13, and a control device 14 (see Fig. 4). In the present embodiment, the main body 1 also incorporates therein an image reading device 15.

The document sheet conveying device 2 is coupled to an upper portion of the main body 1 (see Fig. 1 to Fig. 3). The document sheet conveying device 2 is supported so as to be movable between a closing position that covers a specific area on an upper surface of the main body 1 and an opening position that opens the specific area. The display unit 3 is coupled to a portion of the upper portion of the main body 1 that is provided along a front surface of the main body 1 by the display unit support mechanism 4 (see Fig. 2 and Fig. 3).

The document sheet conveying device 2 includes a document sheet supply tray 21, a document sheet conveying mechanism 22, and a document sheet discharge tray 23 (see Fig. 1). The document sheet conveying mechanism 22 feeds a document sheet on the document sheet supply tray 21 to a conveying path 20, and further discharges the document sheet from the conveying path 20 onto the document sheet discharge tray 23.

The sheet storing portion 11 is capable of storing a plurality of sheets 9. The sheet conveying device 12 sends out the sheets 9 one by one from the sheet storing portion 11 to a conveying path 100, and further conveys the sheets 9 along the conveying path 100. Further, the sheet conveying device 12 sends out the sheet 9 from the conveying path 100 to a subsequent device (not shown).

The printing device 13 executes the print processing on the sheet 9 conveyed along the conveying path 100. In the example shown in Fig. 4, the printing device 13 executes the print processing using electrophotography.

It is noted that the printing device 13 may be a device that executes the print processing using other methods such as an inkjet method.

The image reading device 15 includes an image sensor 151 which reads an image from the document sheet conveyed by the document sheet conveying device 2 (see Fig. 4). The image reading device 15 further includes a scanning mechanism 152 and a platen glass 153. The scanning mechanism 152 causes the image sensor 151 to move along a lower surface of the platen glass 153. Thus, the image sensor 151 can read an image from the document sheet on the platen glass 153.

The control device 14 controls the document sheet conveying device 2, the image reading device 15, the sheet conveying device 12, the printing device 13, and the display unit 3. The control device 14 includes a processor, a secondary storage device, a signal interface, a communication device, and the like (all of which are not shown).

The processor controls each device by executing computer programs stored in the secondary storage device. The processor acquires detection results of various sensors via the signal interface. In addition, the processor outputs control signals to a device to be controlled via the signal interface.

The processor receives a print request from another device via the communication device. Further, the processor causes the sheet conveying device 12 and the printing device 13 to execute the print processing corresponding to the print request.

The display unit 3 is capable of displaying various types of information and images. For example, the display unit 3 is a touch panel unit including a panel display device and a touch panel. The panel display device is a liquid crystal display panel, an organic electroluminescence display, or the like.

The display unit 3 includes a rectangular screen 3a and a rectangular outline corresponding to an outer shape of the screen 3a (see Fig. 1). Shapes of the screen 3a and the outline of the display unit 3 may be a rectangle in which some or all of the four corners are chamfered. The control device 14 causes the display unit 3 to display various menu screens or a display target image such as a print target image. Fig. 1 shows a state where the display unit 3 is supported by the display unit support mechanism 4 in an attitude in which the screen 3a becomes horizontally long.

Incidentally, a user may wish to display the entire display target image that is vertically long on the display unit 3.

For example, the display target image may be reduced such that a length of the display target image in a longitudinal direction fits within a length of a short side of the screen 3a to be displayed on the screen 3a. In this case, the displayed image becomes too small, which lowers visibility of the display target image.

Meanwhile, a situation where the display target image is displayed on the screen 3a while being rotated 90 degrees is also conceivable. In this case, the displayed image is displayed in a direction different from the original direction, and thus the visibility of the display target image is lowered.

As will be described later, the display unit support mechanism 4 supports the display unit 3 in a state where an orientation of the display unit 3 can be changed. Thus, it becomes possible to display the display target image on the rectangular screen 3a with high visibility, regardless of which of the vertically-long image and the horizontally-long image the display target image is.

### [Configuration of display unit support mechanism 4]

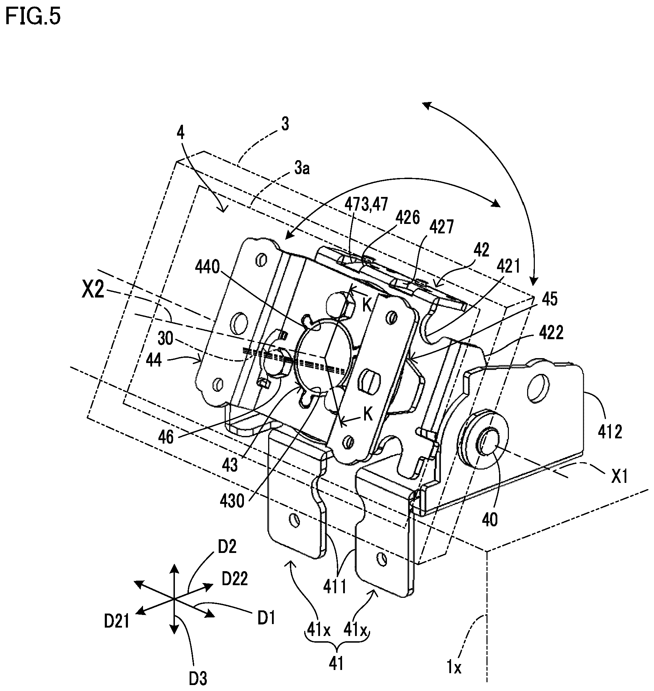

Hereinafter, a configuration of the display unit support mechanism 4 will be described with reference to Fig. 5 to Fig. 16. The display unit support mechanism 4 is fixed to the main body 1 and supports the display unit 3.

In the figures, a width direction D1 is a left-right direction of the main body 1, a depth direction D2 is a front-rear direction of the main body 1, and an up-down direction D3 is an up-down direction of the main body 1. In addition, a forward direction D21 is a direction that is directed from a back surface of the main body 1 toward a front surface, and a rearward direction D22 is a direction that is directed from the front surface of the main body 1 toward the back surface.

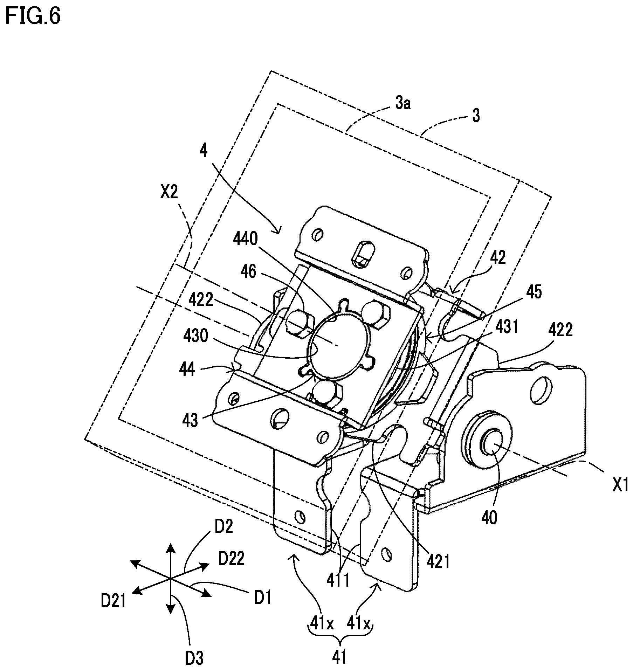

The display unit support mechanism 4 includes a base member 41, a tilt support portion 40, a swing member 42, a rotation member 43, a unit support member 44, and a plurality of coupling members 46 (see Fig. 5 and Fig. 6).

The tilt support portion 40 is supported by the base member 41. The swing member 42 is supported by the tilt support portion 40 while being rotatable about a first axis line X1. Thus, the swing member 42 is rotatable with respect to the base member 41. In other words, the base member 41 rotatably supports the swing member 42 via the tilt support portion 40.

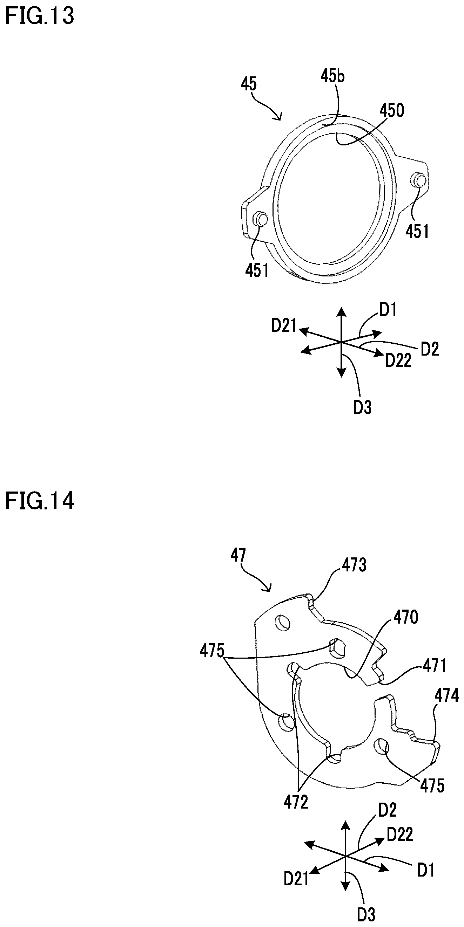

The display unit support mechanism 4 further includes an intervention member 45 and one or more leaf springs 48 (see Fig. 5 to Fig. 8). The display unit support mechanism 4 further includes a reinforcement member 47 (see Fig. 5 and Fig. 14). The leaf spring 48 is an example of a bias mechanism.

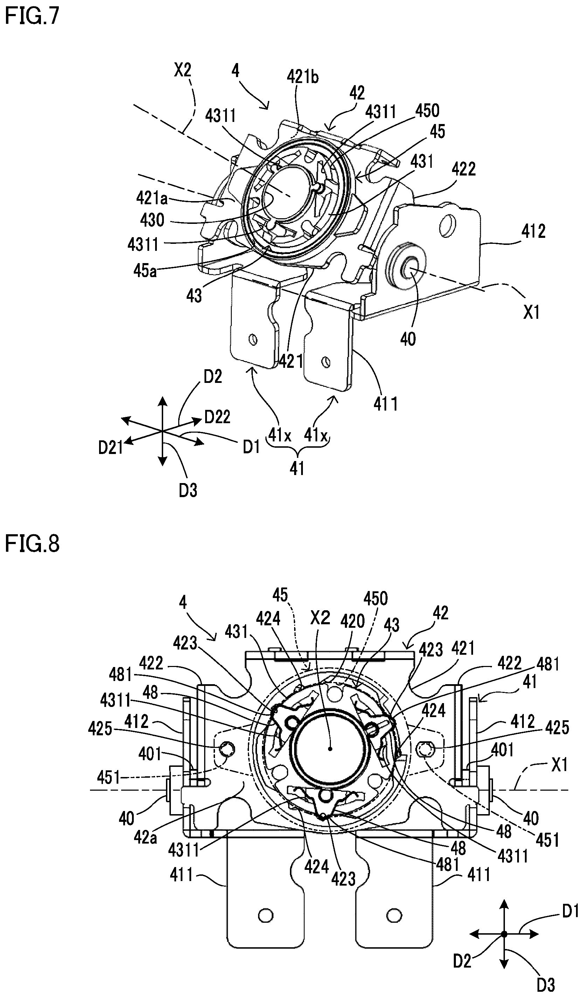

Fig. 5 and Fig. 6 are each a perspective view of the display unit support mechanism 4. Fig. 7 shows the display unit support mechanism 4 from which the unit support member 44, the plurality of coupling members 46, and the leaf spring 48 have been removed. Fig. 8 is a front view of the display unit support mechanism 4 from which the unit support member 44 has been removed.

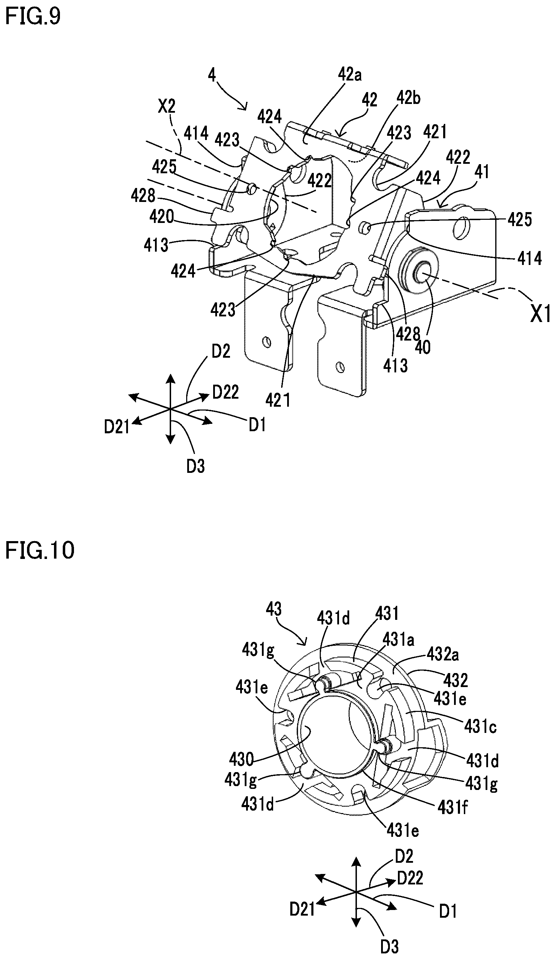

Fig. 9 is a perspective view of the base member 41 and the swing member 42 in the display unit support mechanism 4. Fig. 9 shows the display unit support mechanism 4 from which the unit support member 44, the rotation member 43, the plurality of coupling members 46, and the leaf spring 48 have been removed.

The base member 41 is fixed to a portion provided along the front surface of the main body 1 at the upper portion of the main body 1 (see Fig. 5). The main body 1 is an example of a target device to which the base member 41 is to be attached.

In the present embodiment, the base member 41 is constituted of a pair of unit base members 41x arranged side by side in the width direction D1. The pair of unit base members 41x have the same configuration and are symmetric in shape in the width direction D1.

Each unit base member 41x includes a to-be-fixed portion 411 and a vertical plate portion 412 formed to extend upwardly from the to-be-fixed portion 411. The to-be-fixed portion 411 is fixed to the main body 1 by a screw or a bolt (not shown). Thus, the base member 41 is fixed to the main body 1.

In the present embodiment, the tilt support portion 40 is constituted of a pair of support shaft portions 40x arranged in a straight line along the width direction D1.

The support shaft portions 40x are respectively supported by the vertical plate portions 412 of the unit base members 41x.

A first to-be-in-contact portion 413 and a second to-be-in-contact portion 414 are formed at edge portions of the vertical plate portion 412 (see Fig. 9). The first to-be-in-contact portion 413 is an edge portion extending along the depth direction D2. The second to-be-in-contact portion 414 is an edge portion extending along the up-down direction D3.

The swing member 42 is supported by the tilt support portion 40 while being rotatable about the first axis line X1. The first axis line X1 is a straight line that passes through a center of the tilt support portion 40. In other words, the first axis line X1 is a straight line provided along the width direction D1.

The swing member 42 includes a front plate portion 421, a pair of to-be-supported portions 422, and a first opening 420 (see Fig. 6 and Fig. 9). The front plate portion 421 is formed in a plate shape parallel to the first axis line X1. The first opening 420 is formed to penetrate the front plate portion 421 in a thickness direction.

A pair of contact portions 428 each protruding in a direction of the first axis line X1 are formed at a lower portion of the pair of to-be-supported portions 422 in the front plate portion 421 (see Fig. 9).

The thickness direction of the front plate portion 421 is also a thickness direction of the display unit 3 to be attached to the unit support member 44. In descriptions below, the thickness direction of the front plate portion 421 and the display unit 3 will be referred to as a unit thickness direction.

The unit thickness direction is a direction that intersects with the width direction D1. The front plate portion 421 is formed in a plate shape orthogonal to the unit thickness direction. It is noted that the width direction D1 is an example of a first direction, and the unit thickness direction is an example of a second direction intersecting with the first direction.

The pair of to-be-supported portions 422 are formed to extend from the front plate portion 421 to positions at which the pair of to-be-supported portions 422 intersect with the first axis line X1. The pair of to-be-supported portions 422 are rotatably supported by the pair of support shaft portions 40x. Thus, the swing member 42 can rotate about the first axis line X1.

When the swing member 42 rotates downwardly about the first axis line X1, the pair of contact portions 428 come into contact with the first to-be-in-contact portions 413 of the pair of unit base members 41x. Thus, a further downward rotation of the swing member 42 is restricted, and the display unit 3 is retained in an attitude in which it faces forward (see Fig. 2).

On the other hand, when the swing member 42 rotates upwardly about the first axis line X1, the pair of contact portions 428 come into contact with the second to-be-in-contact portions 414 of the pair of unit base members 41x. Thus, a further upward rotation of the swing member 42 is restricted, and the display unit 3 is retained in an attitude in which it faces upwardly (see Fig. 3).

The attitude of the display unit 3 and the swing member 42 corresponding to the display unit 3 shown in Fig. 2 is a forward attitude in which the screen 3a of the display unit 3 faces forward.

On the other hand, the attitude of the display unit 3 and the swing member 42 corresponding to the display unit 3 shown in Fig. 3 is an upward attitude in which the screen 3a of the display unit 3 faces upward.

The display unit 3 and the swing member 42 are rotatable between the forward attitude and the upward attitude. The tilt support portion 40 realizes a so-called tilt function.

In the present embodiment, the forward attitude of the display unit 3 and the swing member 42 is an attitude in which the screen 3a faces the forward direction D21 along a horizontal direction (see Fig. 1 and Fig. 2).

On the other hand, the upward attitude of the display unit 3 and the swing member 42 is an attitude in which the screen 3a faces an upward vertical direction (see Fig. 3). In other words, the display unit 3 is rotatable within a range of 90 degrees about the first axis line X1.

In the example shown in Fig. 2, when the display unit 3 is in the forward attitude, the front surface of the display unit 3 is arranged along an extension line of a surface of a front exterior panel 1x of the main body 1.

In the example shown in Fig. 3, when the display unit 3 is in the upward attitude, the front surface of the display unit 3 is arranged along an extension line of a surface of an upper exterior panel 1y of the main body 1.

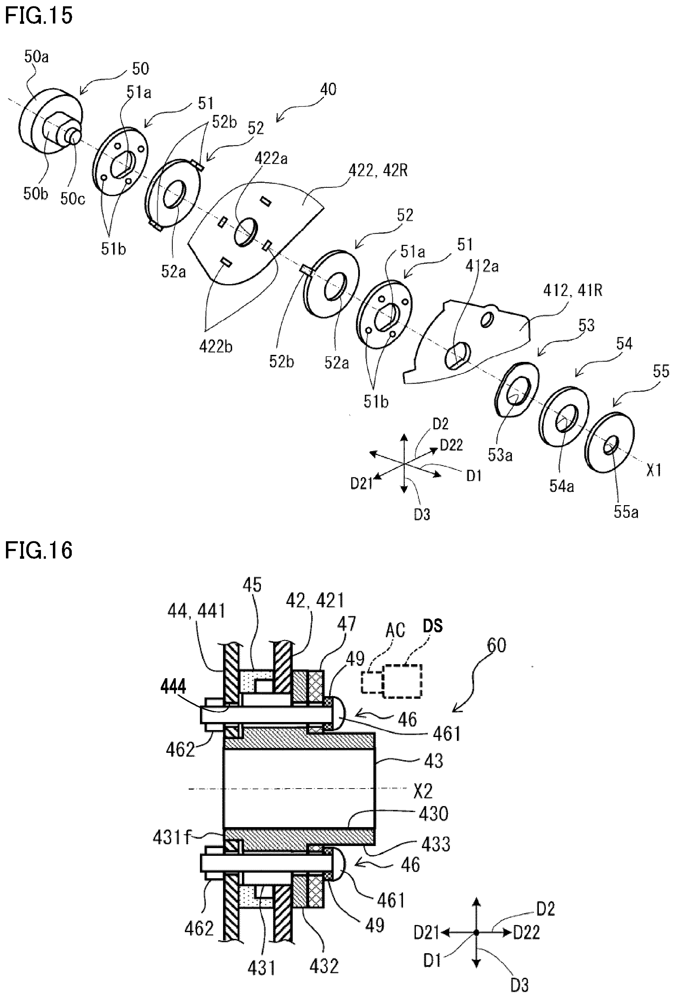

Next, a specific configuration of each of the support shaft portions 40x will be described. Fig. 15 is an exploded perspective view of one of the pair of support shaft portions 40x. The pair of support shaft portions 40x and the pair of unit base members 41x have the same configuration and are symmetric in the width direction D1.

Each of the support shaft portions 40x includes a shaft member 50, a friction plate 51, a fixing member 52, the vertical plate portion 412 of the unit base member 41x, the fixing member 52, the friction plate 51, the vertical plate portion 412 of the base member 41, a bias member 53, a spacer plate 54, and a caulking plate 55.

A shaft center of the shaft member 50 is aligned along the first axis line X1. The shaft member 50 includes a flange portion 50a, a shaft main body portion 50b, and a caulking portion 50c that are formed sequentially along the first axis line X1.

A cross section of the flange portion 50a is circular. The shaft main body portion 50b is thinner than the flange portion 50a. A flat surface is formed at a part of a circumferential surface of the shaft main body portion 50b. The caulking portion 50c is formed at an end portion of the shaft main body portion 50b and has a cylindrical shape that is thinner than the shaft main body portion 50b.

The shaft main body portion 50b is sequentially inserted into holes of the friction plate 51, the fixing member 52, the vertical plate portion 412 of the unit base member 41x, the fixing member 52, the friction plate 51, the vertical plate portion 412 of the base member 41, the bias member 53, and the spacer plate 54. The caulking plate 55 is fixed to the caulking portion 50c.

A non-circular restriction support hole 412a into which the shaft main body portion 50b is inserted is formed in the vertical plate portion 412 of each of the unit base members 41x. The restriction support hole 412a restricts the rotation of the shaft main body portion 50b about the first axis line X1 and retains the restricted state.

A rotation support hole 422a into which the shaft main body portion 50b is inserted is formed in each of the to-be-supported portions 422 of the swing member 42. Each of the to-be-supported portions 422 is rotatable with respect to the shaft main body portion 50b of each of the support shaft portions 40x.

In each of the to-be-supported portions 422, four attachment holes 422b are formed at regular intervals so as to surround the rotation support hole 422a.

The friction plate 51 is a member having excellent wear resistance. The friction plate 51 is formed of, for example, a metal material such as stainless steel. A non-circular shaft hole 51a into which the shaft main body portion 50b is inserted is formed at a center portion of the friction plate 51. The friction plate 51 is incapable of performing a relative rotation with respect to the shaft member 50.

In the friction plate 51, four oil holes 51b are formed at regular intervals so as to surround the shaft hole 51a. A lubricant such as grease is filled in the oil holes 51b. Thus, lubricity provided by the lubricant is maintained for a long period of time.

The fixing member 52 has substantially a disk shape. A shaft hole 52a into which the shaft main body portion 50b of the shaft member 50 is inserted while being relatively rotatable is formed at a center portion of the fixing member 52. A pair of engagement pieces 52b extending toward the to-be-supported portion 422 of the swing member 42 are formed at an outer edge portion of the fixing member 52.

The pair of engagement pieces 52b correspond to two of the four attachment holes 422b. The pair of engagement pieces 52b are overlapped on the to-be-supported portion 422 in a state where the pair of engagement pieces 52b are inserted into two of the four attachment holes 422b. Thus, the fixing member 52 is attached to the to-be-supported portion 422 while being incapable of performing a relative rotation.

The bias member 53 is a wave washer having substantially a disk shape. A shaft hole 53a into which the shaft main body portion 50b is inserted while being relatively rotatable is formed at a center portion of the bias member 53.

The spacer plate 54 has substantially a disk shape. A shaft hole 54a into which the shaft main body portion 50b is inserted while being relatively rotatable is formed at a center portion of the spacer plate 54.

The caulking plate 55 has substantially a disk shape. A shaft hole 55a into which the caulking portion 50c of the shaft member 50 is inserted is formed at a center portion of the caulking plate 55. The caulking plate 55 is fixed to the caulking portion 50c in a state where a side surface of the caulking plate 55 is abutted against an end surface of the shaft main body portion 50b.

The friction plate 51, the fixing member 52, the to-be-supported portion 422 of the swing member 42, the fixing member 52, the friction plate 51, the vertical plate portion 412 of the base member 41, the bias member 53, and the spacer plate 54 are sandwiched between a side surface of the flange portion 50a of the shaft member 50 and the side surface of the caulking plate 55. A shaft length of the shaft main body portion 50b is set so that the bias member 53 is put to a state where it is compressed in the axial direction.

By the compression of the bias member 53, a bias force of the bias member 53 acts in the axial direction. Thus, the to-be-supported portion 422 is sandwiched between the flange portion 50a of the shaft member 50 and the vertical plate portion 412 of the unit base member 41x via the friction plate 51 and the fixing member 52.

Accordingly, when the swing member 42 rotates about the first axis line X1, a rotational load is generated by the frictional force of the friction plate 51 and the like. The attitude of the swing member 42 about the first axis line X1 is retained by the rotational load. Thus, the attitude of the swing member 42 is prevented from being changed unintentionally.

Further, the rotational load of the swing member 42 can be adjusted by setting the shaft length of the shaft main body portion 50b, the thickness of the spacer plate 54, an elastic property of the bias member 53, or the like. Therefore, an appropriate rotational load can be easily set according to the shape of the display unit 3 retained by the display unit support mechanism 4, and the like.

Next, a configuration of a pivot support portion 60 will be described with reference to Fig. 5 to Fig. 14 and Fig. 16. The pivot support portion 60 rotatably supports the display unit 3 along the screen 3a. The cross-sectional view of the pivot support portion 60 shown in Fig. 16 is a cross-sectional view taken along the line K-K in Fig. 5.

The pivot support portion 60 is attached to the swing member 42. The pivot support portion 60 includes the rotation member 43, the unit support member 44, the intervention member 45, the plurality of coupling members 46, the reinforcement member 47, the leaf spring 48, and an elastic member 49.

The rotation member 43 is a molded synthetic resin member attached to the front plate portion 421 of the swing member 42. The rotation member 43 is supported while being rotatable about a second axis line X2 (see Fig. 5 to Fig. 7). The second axis line X2 is a straight line extending along the unit thickness direction. The second axis line X2 is a straight line orthogonal to the first axis line X1 or a straight line parallel to a straight line orthogonal to the first axis line X1.

The display unit 3 is fixed to the unit support member 44 by a screws or a bolt (not shown) (see Fig. 5 and Fig. 6). In other words, the display unit 3 is coupled to the rotation member 43 via the unit support member 44. In Fig. 5 and Fig. 6, the display unit 3 is illustrated in virtual lines.

Accordingly, the display unit 3 is, together with the unit support member 44, the rotation member 43, and the swing member 42, rotatable about the first axis line X1.

Furthermore, the display unit 3, the unit support member 44, and the rotation member 43 are rotatable about the second axis line X2.

The attitude of the rotation member 43 and display unit 3 shown in Fig. 5 is a horizontal attitude in which the screen 3a of the display unit 3 becomes horizontally long. On the other hand, the attitude of the rotation member 43 and display unit 3 shown in Fig. 6 is a vertical attitude in which the screen 3a of the display unit 3 becomes vertically long.

The rotation member 43 and the display unit 3 are, together with the unit support member 44, rotatable about the second axis line X2 between the horizontal attitude and the vertical attitude (see Fig. 5 and Fig. 6). The pivot support portion 60 realizes a so-called pivot function.

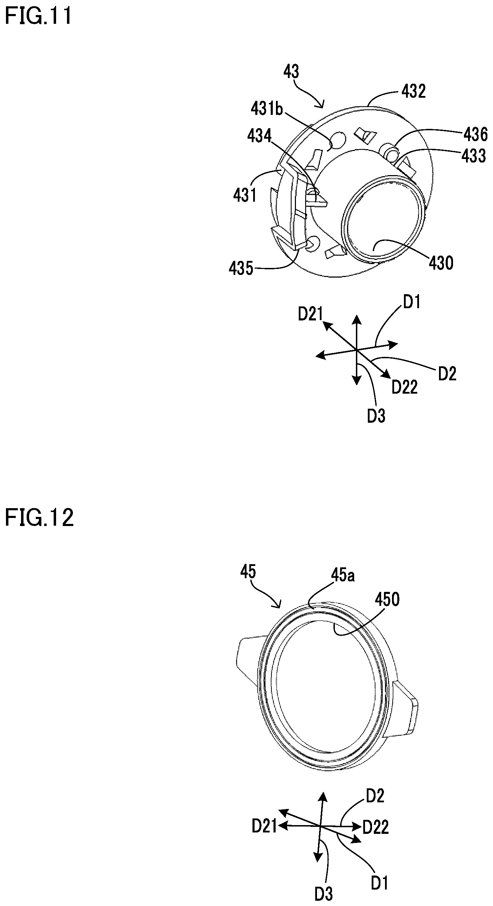

The rotation member 43 includes an insertion portion 431, a flange portion 432, a cylindrical portion 433, and an engagement portion 434 (see Fig. 10 and Fig. 11). A portion of the rotation member 43 from the insertion portion 431 to the cylindrical portion 433 is formed with a third opening 430 penetrating in a direction along the second axis line X2.

The insertion portion 431 is a portion that is inserted into the first opening 420 of the front plate portion 421. The flange portion 432 is formed to protrude from an outer edge of the insertion portion 431 along a back surface 421b of the front plate portion 421 (see Fig. 10 and Fig. 11).

Further, the insertion portion 431 includes one or more spring retention portions 4311 that retain the one or more leaf springs 48 (see Fig. 7 and Fig. 8). The spring retention portions 4311 are formed on a front surface 431a side of the insertion portion 431.

An outer circumferential surface 431c of the insertion portion 431 is formed along a circumferential surface centered on the second axis line X2. The outer circumferential surface 431c is formed with one or more openings 431d that communicate with the one or more spring retention portions 4311. In the present embodiment, three openings 431d are formed in correspondence with the three spring retention portions 4311.

Furthermore, the outer circumferential surface 431c is formed with a plurality of notches 431e into which the plurality of coupling members 46 are to be inserted. Each of the notches 431e penetrates from the front surface 431a to the back surface 431b of the insertion portion 431.

In the present embodiment, the display unit support mechanism 4 includes three leaf springs 48, and the insertion portion 431 includes three spring retention portions 4311 (see Fig. 8). The leaf springs 48 are respectively retained by the spring retention portions 4311. Each of the leaf springs 48 includes a curved contact portion 481 that protrudes outwardly from the opening 431d on the outer circumferential surface 431c of the insertion portion 431.

First fitting portions 423 and second fitting portions 424 are formed at an edge portion of the first opening 420 of the swing member 42 (see Fig. 8 and Fig. 9). The first fitting portions 423 and the second fitting portions 424 fit with the contact portions 481 protruding from the openings 431d of the rotation member 43. For example, the first fitting portions 423 and the second fitting portions 424 are each a concave portion having an arc shape.

In other words, the three leaf springs 48 respectively include three contact portions 481. The three leaf springs 48 respectively bias the three contact portions 481 toward the first fitting portions 423 and second fitting portions 424 of the insertion portion 431. Thus, the three contact portions 481 come into contact with parts of the swing member 42. The three leaf springs 48 are an example of a bias mechanism. It is noted that the bias mechanism may be constituted of one leaf spring 48, two leaf springs 48, or four or more leaf springs 48.

Furthermore, an annular rib 431f is formed on the front surface 431a of the insertion portion 431 along an edge portion of the third opening 430. The annular rib 431f protrudes from the front surface 431a. A plurality of engagement protrusions 431g protruding in a radial direction are formed on an outer circumferential surface of the annular rib 431f. The plurality of engagement protrusions 431g are formed with intervals in the circumferential direction.

A detection portion 435 protruding at a predetermined height from the back surface 431b of the insertion portion 431 is formed on an outer side of the cylindrical portion 433 (see Fig. 11). The detection portion 435 has substantially a plate shape formed with a predetermined width and a predetermined thickness along an arc that centers on the second axis line X2. A plurality of engagement protrusions 436 are formed on the outer side of the cylindrical portion 433 on the back surface 431b of the insertion portion 431. The plurality of engagement protrusions 436 are formed with intervals in the circumferential direction.

The display unit support mechanism 4 further includes an object detection sensor DS attached to the swing member 42 by an attachment member (not shown) (see Fig. 16). The object detection sensor DS detects the detection portion 435 to thereby detect a rotational position of the rotation member 43.

For example, the object detection sensor DS is a microswitch. In this case, the object detection sensor DS includes an actuator AC that is displaced by coming into contact with the detection portion 435. The object detection sensor DS detects the detection portion 435 that has come into contact with the actuator AC.

In midst of the rotation of the rotation member 43 from the horizontal attitude shown in Fig. 5 to the vertical attitude shown in Fig. 6, the detection portion 435 comes into contact with the actuator AC. This causes the object detection sensor DS to be switched from an OFF state to an ON state. The OFF state is a state where the object detection sensor DS is not detecting the detection portion 435. The ON state is a state where the object detection sensor DS is detecting the detection unit 435.

The unit support member 44 is a sheet metal member and includes a bottom plate portion 441 and flange portions 442. The bottom plate portion 441 is a rectangular flat plate. The flange portions 442 are respectively erected from a pair of opposing edge portions of the bottom plate portion 441, and further protrude outwardly on both sides via a pair of bent portions.

The bottom plate portion 441 is fixed to the rotation member 43 by the plurality of coupling members 46. The display unit 3 is fixed to the flange portions 442.

A fourth opening 440 and a plurality of notches 443 are formed in the bottom plate portion 441. The annular rib 431f of the insertion portion 431 in the rotation member 43 is fit into the fourth opening 440. The plurality of notches 443 are formed at an edge portion of the fourth opening 440 and engage with the engagement protrusion 431g. In addition, three coupling through-holes 444 into which the three coupling members 46 are respectively inserted are formed at portions of the bottom plate portion 441 on the outer side of the fourth opening 440.

The intervention member 45 is a member that is sandwiched between the front plate portion 421 of the swing member 42 and the bottom plate portion 441 of the unit support member 44 (see Fig. 16). A back surface 45b of the intervention member 45 is in contact with the front surface 421a of the front plate portion 421, and a front surface 45a of the intervention member 45 is in contact with the bottom plate portion 441 of the unit support member 44 (see Fig. 16).

The intervention member 45 includes a second opening 450 penetrating in the unit thickness direction. The second opening 450 communicates with the first opening 420 of the front plate portion 421 in the unit thickness direction (see Fig. 8). In Fig. 8 , the intervention member 45 is illustrated in virtual lines (dash-dot-dot lines). The insertion portion 431 of the rotation member 43 is fit into the second opening 450.

The intervention member 45 includes a pair of convex portions 451 that protrude toward the front plate portion 421 side (see Fig. 8 and Fig. 13). The pair of convex portions 451 are formed at positions opposing each other via the second opening 450.

Meanwhile, a pair of latch holes 425 are formed in the front plate portion 421 (see Fig. 7 and Fig. 8). The pair of convex portions 451 are respectively inserted into the pair of latch holes 425 (see Fig. 8). The pair of latch holes 425 latch the pair of convex portions 451 to thus position the intervention member 45 on the surface of the front plate portion 421. The pair of latch holes 425 and the pair of convex portions 451 prevent the intervention member 45 from rotating in conjunction with the rotation of the rotation member 43.

The reinforcement member 47 is a flat-plate-type sheet metal member that is arranged on the back surface 431b of the insertion portion 431 (see Fig. 14 and Fig. 16). The reinforcement member 47 is formed with a circular opening 470 into which the cylindrical portion 433 of the rotation member 43 is fit. The opening 470 communicates with an area outside the reinforcement member 47 via a communication portion 471.

A plurality of notches 472 are formed at an edge portion of the opening 470 in the reinforcement member 47. The plurality of engagement protrusions 436 of the rotation member 43 engage with the plurality of notches 472. In the present embodiment, two notches 472 and two engagement protrusions 436 are formed with intervals in the circumferential direction.

The reinforcement member 47 is formed with a plurality of through-holes 475 into which the plurality of coupling members 46 are to be inserted. In the present embodiment, three through-holes 475 are formed so as to surround the opening 470.

The reinforcement member 47 further includes a first convex portion 473 and a second convex portion 474 that protrude outwardly from the outer edge (see Fig. 14). Meanwhile, the swing member 42 includes a first latch portion 426 and a second latch portion 427 (see Fig. 5).

The first latch portion 426 latches the first convex portion 473 to latch the reinforcement member 47 at a first position (see Fig. 5). The second latch portion 427 latches the second convex portion 474 to latch the reinforcement member 47 at a second position (see Fig. 6).

The reinforcement member 47 is coupled to the display unit 3 and the rotation member 43. The first position is a position of the reinforcement member 47 when the display unit 3 is in the horizontal attitude. On the other hand, the second position is a position of the reinforcement member 47 when the display unit 3 is in the vertical attitude.

The reinforcement member 47 is an example of a metal member coupled to the rotation member 43. It is noted that the first latch portion 426 and the second latch portion 427 may alternatively latch the unit support member 44. The unit support member 44 is also an example of a metal member coupled to the rotation member 43.

The first latch portion 426, the second latch portion 427, the first convex portion 473, and the second convex portion 474 prevent an excessive force from being applied to the rotation member 43 formed of a synthetic resin.

Each of the coupling members 46 includes a bolt 461 and a nut 462 (see Fig. 16). The bolt 461 is inserted into the notch 431e and the coupling through-hole 444 of the unit support member 44 from the rear surface 431b side of the insertion portion 431.

The nut 462 is fastened to a screw portion of the bolt 461 protruding from the coupling through-hole 444 (see Fig. 16). In addition, the elastic member 49 is inserted between a head portion of the bolt 461 and the reinforcement member 47 (see Fig. 11).

The elastic member 49 is a substantially disk-shaped member formed with a through-hole into which the bolt 461 is inserted. For example, the elastic member 49 is a rubber member or a wave washer.

By fastening the bolt 461 and the nut 462, the elastic member 49 is compressed in the direction of the second axis line X2. An elastic force of the elastic member 49 acts as a force for clamping the flange portion 432 of the rotation member 43, the front plate portion 421 of the swing member 42, the intervention member 45, and the bottom plate portion 441 of the unit support member 44.

Since the unit support member 44 is coupled to the rotation member 43 by the plurality of coupling members 46, the unit support member 44 is rotatable about the second axis line X2 together with the rotation member 43.

When the unit support member 44 and the rotation member 43 rotate about the second axis line X2, the bottom plate portion 441 of the unit support member 44 and the intervention member 45 slide against each other, and the flange portion 432 of the rotation member 43 and the front plate portion 421 of the swing member 42 slide against each other. Frictional forces generated by these sliding movements act on the unit support member 44 as a rotational load about the second axis line X2. The attitude of the unit support member 44 about the second axis line X2 is retained by the rotational load. Thus, the attitude of the unit support member 44 is prevented from being changed unintentionally.

Further, the rotational load of the unit support member 44 can be adjusted by setting a tightening torque of the bolt 461 and nut 462 of each of the coupling members 46, the property of the elastic member 49, or the like. Thus, an appropriate rotational load can be easily set according to the shape of the display unit 3 retained by the display unit support mechanism 4, and the like.

As described above, the display unit 3 is rotatable between the horizontal attitude and the vertical attitude. Therefore, a user can change the orientation of the display unit 3 according to an orientation of an image displayed on the display unit 3.

When causing the display unit 3 to display an entire display target image, the control device 14 causes the display unit 3 to display the display target image in an orientation in which long sides of the display target image are provided along long sides of the screen 3a.

When the print target image is a horizontally-long image, the user can rotate the display unit 3 so that the display unit 3 takes the horizontal attitude. On the other hand, when the display target image is a vertically-long image, the user can rotate the display unit 3 so that the display unit 3 takes the vertical attitude. Thus, visibility of the display target image is improved.

In the present embodiment, the control device 14 inputs attitude information and switches the orientation of the display target image to be displayed on the display unit 3 in accordance with the attitude information. The attitude information is information indicating which of the horizontal attitude and the vertical attitude the unit support member 44 is in.

For example, the attitude information is information input by a touch operation made to the display unit 3. Alternatively, the attitude information may be information of a detection signal from the object detection sensor DS. The object detection sensor DS is an example of an attitude detection portion which detects which of the horizontal attitude and the vertical attitude the unit support member 44 is in.

Furthermore, the user can rotate the display unit 3 between the forward attitude and the upward attitude according to his/her height. Thus, visibility of various images such as the display target image displayed on the display unit 3 is improved.

When the display unit 3 rotates about the second axis line X2, the unit support member 44 is rubbed against the front surface 45a of the intervention member 45, and the flange portion 432 of the rotation member 43 is rubbed against the back surface 421b of the front plate portion 421.

In other words, when the display unit 3 rotates about the second axis line X2, the metal member is rubbed against the synthetic resin member, but the metal members are not rubbed against each other. Thus, the rotation member 43 rotates smoothly.

As described above, the insertion portion 431 of the rotation member 43 includes the third opening 430 that penetrates in the unit thickness direction (see Fig. 5 to Fig. 7, and Fig. 11). The third opening 430 is also an opening of the cylindrical portion 433 (see Fig. 11).

Similarly, the unit support member 44 includes the fourth opening 440 that penetrates in the unit thickness direction (see Fig. 5 and Fig. 6). The fourth opening 440 communicates with the third opening 430 in the unit thickness direction.

The image forming apparatus 10 further includes a cable 30 having one end connected to the display unit 3 (see Fig. 5). The cable 30 is wired from the control device 14 in the main body 1 to the display unit 3 via insides of the third opening 430 and the fourth opening 440 (see Fig. 5). Thus, the cable 30 can be wired in a short path. In addition, the insertion portion 431 and cylindrical portion 433 of the rotation member 43 serve to protect the cable 30.

The first fitting portions 423 fit with the contact portions of the leaf springs 48 when the display unit 3 is in the horizontal attitude. Fig. 8 shows a state where the first fitting portions 423 are engaged with the contact portions 481 of the leaf springs 48. The fitting of the first fitting portions 423 with the contact portions 481 of the leaf springs 48 is released when the display unit 3 rotates from the horizontal attitude to the vertical attitude.

The second fitting portions 424 fit with the contact portions 481 of the leaf springs 48 when the display unit 3 is in the vertical attitude. The fitting of the second fitting portions 424 with the contact portions 481 of the leaf springs 48 is released when the display unit 3 rotates from the vertical attitude to the horizontal attitude.

The leaf springs 48, the first fitting portions 423, and the second fitting portions 424 give a sense of a click to a hand of the user when rotating the display unit 3.

That is, when the display unit 3 rotates and reaches a position of the horizontal attitude, the leaf springs 48 and the first fitting portions 423 give a sense of a click to the hand of the user. When the display unit 3 rotates and reaches a position of the vertical attitude, the leaf springs 48 and the second fitting portions 424 give a sense of a click to the hand of the user.

By the sense of a click given to the hand of the user, the user stops the operation of rotating the display unit 3. Thus, a situation where an excessive rotational force is applied to the display unit 3 is avoided.

As described above, by adopting the display unit support mechanism 4, it is possible to realize a support mechanism which provides a high degree of freedom in changing the attitude of the display unit 3. Moreover, the display unit support mechanism 4 is a relatively simple mechanism.

Therefore, by adopting the display unit support mechanism 4, a support mechanism which provides a high degree of freedom in changing the attitude of the display unit 3 is realized at low costs and in a small space. Furthermore, in the display unit support mechanism 4, wiring processing of the cable 30 is easy.

### [Display unit support mechanism 4X according to modified example]

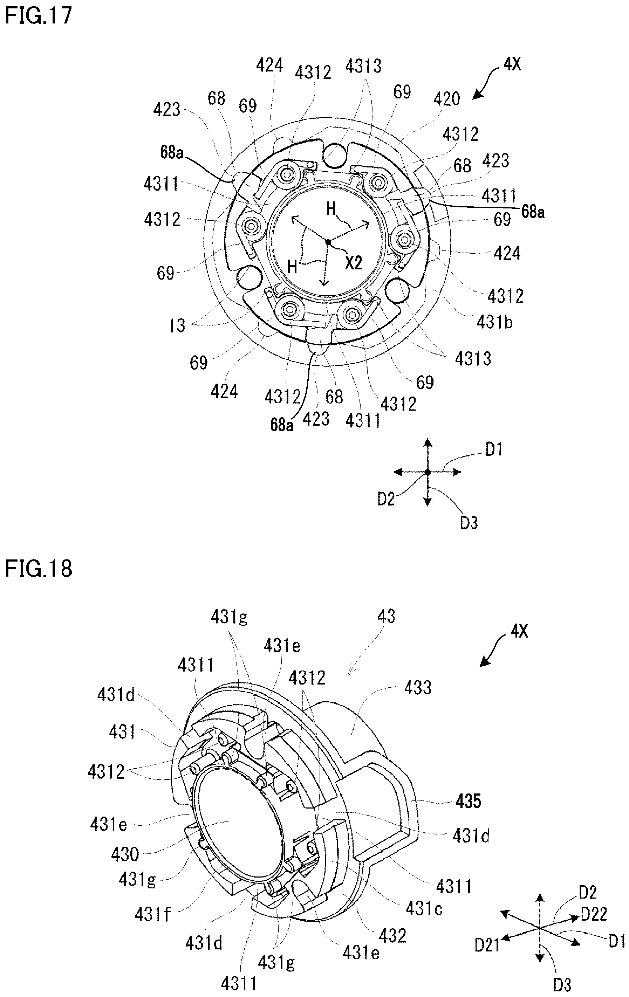

Next, a display unit support mechanism 4X which is a modified example of the display unit support mechanism 4 will be described with reference to Fig. 17 to Fig. 20.

In Fig. 17 to Fig. 20, constituent elements that are in common with the display unit support mechanism 4 are denoted by reference symbols that are the same as those of Fig. 4 to Fig. 16.

Hereinafter, points of the display unit support mechanism 4X that are different from those of the display unit support mechanism 4 will be described. It is noted that descriptions on the configuration of the display unit support mechanism 4X that is in common with the display unit support mechanism 4 will be omitted.

The display unit support mechanism 4X includes one or more slide members 68 and one or more torsion coil springs 69 in place of the one or more leaf springs 48. The insertion portion 431 of the display unit support mechanism 4X includes one or more spring retention portions 4311 similar to the display unit support mechanism 4.

In the present modified example, the display unit support mechanism 4X includes three spring retention portions 4311, three slide members 68, and three pairs of torsion coil springs 69.

In the present modified example, each of the spring retention portions 4311 supports one slide member 68 and one pair of torsion coil springs 69. Each of the spring retention portions 4311 includes a pair of bosses 4312 and a pair of engagement grooves 4313 (see Fig. 17).

In the present modified example, three openings 431d are formed in correspondence with the three spring retention portions 4311. This configuration is similar to that of the display unit support mechanism 4.

Each of the bosses 4312 is a cylindrical convex portion extending along the second axis line X2. In each of the spring retention portions 4311, the pair of bosses 4312 are formed at positions opposing each other via the opening 431d.

Each of the slide members 68 is a molded member formed of a synthetic resin. Each of the spring retention portions 4311 supports the slide member 68 between the pair of bosses 4312. Each of the spring retention portions 4311 supports the slide member 68 such that the slide member 68 is slidable along a radial direction H about the second axis line X2.

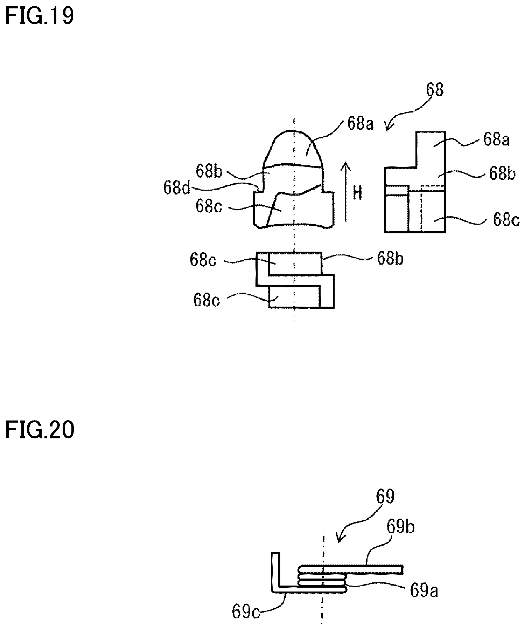

Each of the slide members 68 includes a contact portion 68a and a leg portion 68b (see Fig. 19). The contact portion 68a is an end portion on an outer side of the radial direction H. The leg portion 68b is a portion on an inner side of the radial direction H with respect to the contact portion 68a. The contact portion 68a is a portion that comes into contact with a part of the swing member 42.

As each of the slide members 68 moves outwardly in the radial direction H, the contact portion 68a protrudes outwardly in the radial direction H from the opening 431d. The leg portion 68b and a concave portion 68c move on the inner side of the radial direction H with respect to the opening 431d.

The contact portion 68a has a smaller thickness in the direction of the second axis line X2 than the leg portion 68b. The leg portion 68b includes a step portion 68d formed at a boundary between a small-width portion on the outer side of the radial direction H and a large-width portion on the inner side of the radial direction H. The step portion 68d restricts a movement range of the slide member 68 toward the outer side of the radial direction H.

Similar to the contact portion 481 of the leaf spring 48, an outline of a tip end portion of the contact portion 68a is curved. The concave portion 68c that is concave in the thickness direction is formed mainly in the large-width portion of the leg portion 68b.

The concave portion 68c is opened toward the inner side of the radial direction H and one side of the width direction. A depth of the concave portion 68c is shallower than half the thickness of the leg portion 68b. The concave portion 68c is formed on both the front and back surfaces of the leg portion 68b (see Fig. 19). The leg portion 68b has a shape that is rotationally symmetric with respect to a center line of the slide member 68 provided along the radial direction H.

Each of the torsion coil springs 69 includes a coil portion 69a, a first arm portion 69b, and a second arm portion 69c. The first arm portion 69b extends linearly from one end side of the coil portion 69a in the radial direction of the coil portion 69a. The second arm portion 69c extends linearly from the other end side of the coil portion 69a in the radial direction, is then bent toward the first arm portion 69b, and extends along the axial direction of the coil portion 69a. The portion of the second arm portion 69c provided along the axial direction is longer than the coil portion 69a in the axial direction.

The bosses 4312 are respectively inserted into the coil portions 69 a of the torsion coil springs 69, so that the torsion coil springs 69 are retained by the spring retention portions 4311.

Each of the engagement grooves 4313 is a slit-like groove extending from a root portion of the boss 4312 on the front surface 431 a of the insertion portion 431.

The second arm portion 69c is fit into the engagement groove 4313. Thus, the position of the second arm portion 69c in the circumferential direction of the coil portion 69a is fixed. The first arm portion 69b is inserted into the concave portion 68c of the slide member 68.

The first arm portion 69b is abutted against a bottom surface of the concave portion 68c, and a tip end portion of the second arm portion 69c is abutted against a bottom surface of the engagement groove 4313 or the bottom plate portion 441 of the unit support member 44, thereby restricting the movement of the torsion coil spring 69 in the axial direction of the boss 4312. Thus, the torsion coil springs 69 are respectively retained by the bosses 4312.

In the present modified example, the first arm portion 69b biases the leg portion 68b outwardly in the radial direction H by the elastic force of the torsion coil spring 69. That is, each pair of the torsion coil springs 69 bias each of the slide members 68 outwardly in the radial direction H by a torsion moment. Thus, when the unit support member 44 is in the horizontal attitude or the vertical attitude shown in Fig. 5 or Fig. 6, the contact portion 68a of each of the slide members 68 fits with the first fitting portion 423 or second fitting portion 424 of the swing member 42.

In the present modified example, the plurality of slide members 68 and the plurality of torsion coil springs 69 are an example of the bias mechanism. When the display unit support mechanism 4X is adopted, effects similar to those obtained in the case where the display unit support mechanism 4 is adopted can be obtained.

### [Notes of disclosure]

Hereinafter, a general outline of the disclosure extracted from the embodiment described above will be noted. It is noted that the respective configurations and processing functions described in the notes below can be sorted and arbitrarily combined as appropriate.

### <Note 1>

A display unit support mechanism, including:
a base member fixed to a target device;
a swing member which is supported by the base member while being rotatable about a first axis line provided along a first direction that is a left-right direction of the target device;
a rotation member which is supported by the swing member while being rotatable about a second axis line provided along a second direction that intersects with the first direction; and
a unit support member which is coupled to the rotation member and is rotatable with the rotation member, and to which a display unit including a rectangular screen is fixed, in which
the unit support member is, together with the rotation member and the swing member, rotatable about the first axis line between a forward attitude in which the screen faces toward a front of the target device and an upward attitude in which the screen faces upwardly, and
the unit support member further is, together with the rotation member, rotatable about the second axis line between a horizontal attitude in which the screen becomes horizontally long and a vertical attitude in which the screen becomes vertically long.

### <Note 2>

The display unit support mechanism according to note 1, further including:
an intervention member interposed between the swing member and the unit support member, in which
the swing member includes
a front plate portion formed in a plate shape orthogonal to the second direction, and
a first opening formed in the front plate portion while penetrating in the second direction,
the intervention member includes a second opening which communicates with the first opening and penetrates in the second direction,
the rotation member includes
an insertion portion inserted into the first opening and the second opening, and
a flange portion formed to protrude from an outer edge of the insertion portion along a back surface of the front plate portion,
the intervention member is interposed between a front surface of the front plate portion and the unit support member,
the unit support member is coupled to the insertion portion of the rotation member,
the base member, the swing member, and the unit support member are each a metal member, and
the rotation member and the intervention member are each a synthetic resin member.

### <Note 3>

The display unit support mechanism according to note 2, further including:
a reinforcement member which is a metal member arranged along a back surface of the insertion portion, in which
the unit support member is coupled to the insertion portion and the reinforcement member.

### <Note 4>

The display unit support mechanism according to note 2 or 3, further including:
a bias mechanism which is supported by the insertion portion of the rotation member and includes one or more contact portions that are biased in a predetermined direction to come into contact with a part of the swing member, in which
the swing member includes
a first fitting portion which fits with the contact portion when the display unit is in the horizontal attitude, and the fitting with the contact portion is released when the display unit rotates from the horizontal attitude to the vertical attitude, and
a second fitting portion which fits with the contact portion when the display unit is in the vertical attitude, and the fitting with the contact portion is released when the display unit rotates from the vertical attitude to the horizontal attitude.

### <Note 5>

The display unit support mechanism according to note 4, in which
the bias mechanism includes one or more leaf springs which include the contact portion having a curved shape and bias the contact portion toward the first fitting portion or the second fitting portion.

### <Note 6>

The display unit support mechanism according to note 4, in which
the bias mechanism includes
a slide member which includes the contact portion and is supported slidably, and
a spring which biases the slide member toward the first fitting portion or the second fitting portion.

### <Note 7>

The display unit support mechanism according to any one of notes 2 to 6, in which the swing member includes
a first latch portion which latches a metal member coupled to the rotation member at a position when the unit support member is in the horizontal attitude, and
a second latch portion which latches the metal member coupled to the rotation member at a position when the unit support member is in the vertical attitude.

### <Note 8>

The display unit support mechanism according to any one of notes 2 to 7, including:
a cable having one end connected to the display unit, in which
the insertion portion of the rotation member includes a third opening penetrating in the second direction,
the unit support member includes a fourth opening which communicates with the third opening and penetrates in the second direction, and
the cable is wired from inside a main body to the display unit via insides of the third opening and the fourth opening.

### <Note 9>

An image forming apparatus, including:
a main body which incorporates therein a printing device which forms an image on a sheet;
a display unit including a rectangular screen; and
the display unit support mechanism according to any one of notes 1 to 8, which is fixed to the main body and supports the display unit.

### <Note 10>

The image forming apparatus according to note 9, including:
a control device which inputs attitude information expressing which of the horizontal attitude and the vertical attitude the unit support member is in, and switches an orientation of an image to be displayed on the display unit according to the attitude information.

It is to be understood that the embodiments herein are illustrative and not restrictive, since the scope of the disclosure is defined by the appended claims rather than by the description preceding them, and all changes that fall within metes and bounds of the claims, or equivalence of such metes and bounds thereof are therefore intended to be embraced by the claims.

## Claims

1. A display unit support mechanism (4), comprising:
a base member (41) fixed to a target device (1);
a swing member (42) which is supported by the base member (41) while being rotatable about a first axis line provided along a first direction that is a left-right direction of the target device (1);
a rotation member (43) which is supported by the swing member (42) while being rotatable about a second axis line provided along a second direction that intersects with the first direction; and
a unit support member (44) which is coupled to the rotation member (43) and is rotatable with the rotation member (43), and to which a display unit (3) including a rectangular screen is fixed, wherein
the unit support member (44) is, together with the rotation member (43) and the swing member (42), rotatable about the first axis line between a forward attitude in which the screen faces toward a front of the target device (1) and an upward attitude in which the screen faces upwardly, and
the unit support member (44) further is, together with the rotation member (43), rotatable about the second axis line between a horizontal attitude in which the screen becomes horizontally long and a vertical attitude in which the screen becomes vertically long.

2. The display unit support mechanism (4) according to claim 1, further comprising:
an intervention member (45) interposed between the swing member (42) and the unit support member (44), wherein
the swing member (42) includes
a front plate portion (421) formed in a plate shape orthogonal to the second direction, and
a first opening (420) formed in the front plate portion (421) while penetrating in the second direction,
the intervention member (45) includes a second opening (450) which communicates with the first opening (420) and penetrates in the second direction,
the rotation member (43) includes
an insertion portion (431) inserted into the first opening (420) and the second opening (450), and
a flange portion (432) formed to protrude from an outer edge of the insertion portion (431) along a back surface of the front plate portion (421),
the intervention member (45) is interposed between a front surface of the front plate portion (421) and the unit support member (44),
the unit support member (44) is coupled to the insertion portion (431) of the rotation member (43),
the base member (41), the swing member (42), and the unit support member (44) are each a metal member, and
the rotation member (43) and the intervention member (45) are each a synthetic resin member.

3. The display unit support mechanism (4) according to claim 2, further comprising:
a reinforcement member (47) which is a metal member arranged along a back surface of the insertion portion (431), wherein
the unit support member (44) is coupled to the insertion portion (431) and the reinforcement member (47).

4. The display unit support mechanism (4) according to claim 2 or 3, further comprising:
a bias mechanism (48, 68, 69) which is supported by the insertion portion (431) of the rotation member (43) and includes one or more contact portions (481, 68a) that are biased in a predetermined direction to come into contact with a part of the swing member (42), wherein
the swing member (42) includes
a first fitting portion which fits with the contact portion when the display unit (3) is in the horizontal attitude, and the fitting with the contact portion is released when the display unit (3) rotates from the horizontal attitude to the vertical attitude, and
a second fitting portion which fits with the contact portion when the display unit (3) is in the vertical attitude, and the fitting with the contact portion is released when the display unit (3) rotates from the vertical attitude to the horizontal attitude.

5. The display unit support mechanism (4) according to claim 4, wherein
the bias mechanism (48) includes one or more leaf springs which include the contact portion (481) having a curved shape and bias the contact portion toward the first fitting portion or the second fitting portion.

6. The display unit support mechanism (4) according to claim 4, wherein
the bias mechanism (68, 69) includes
a slide member (68) which includes the contact portion (68a) and is supported slidably, and
a spring (69) which biases the slide member (68) toward the first fitting portion or the second fitting portion.

7. The display unit support mechanism (4) according to claim 2 or 3, wherein
the swing member (42) includes
a first latch portion (426) which latches a metal member coupled to the rotation member (43) at a position when the unit support member (44) is in the horizontal attitude, and
a second latch portion (427) which latches the metal member coupled to the rotation member (43) at a position when the unit support member (44) is in the vertical attitude.

8. The display unit support mechanism (4) according to claim 2 or 3, comprising:
a cable (30) having one end connected to the display unit (3), wherein
the insertion portion (431) of the rotation member (43) includes a third opening (430) penetrating in the second direction,
the unit support member (44) includes a fourth opening (440) which communicates with the third opening (430) and penetrates in the second direction, and
the cable (30) is wired from inside the target device (1) to the display unit (3) via insides of the third opening (430) and the fourth opening (440).

9. An image forming apparatus (10), comprising:
a main body (1) which incorporates therein a printing device (13) which forms an image on a sheet;
a display unit (3) including a rectangular screen; and
the display unit support mechanism (4) according to any one of claims 1 to 3, which is fixed to the main body (1) and supports the display unit (3).

10. The image forming apparatus (10) according to claim 9, comprising:
a control device (14) which inputs attitude information expressing which of the horizontal attitude and the vertical attitude the unit support member (44) is in, and switches an orientation of an image to be displayed on the display unit (3) according to the attitude information.
